# EUROPÄISCHE PATENTSCHRIFT

(11) **EP 3 685 101 B1**
(45) Veröffentlichungstag und Bekanntmachung des Hinweises auf die Patenterteilung: **12.11.2025**
(21) Anmeldenummer: 18779309.6
(22) Anmeldetag: 20.09.2018
(51) Int. Cl.: F23R 3/40, F23R 3/34, F23C 13/04, F23R 3/26

(54) **VERFAHREN UND VORRICHTUNG ZUR UMSETZUNG VON BRENNSTOFFEN**
METHOD AND DEVICE FOR REACTING FUELS
PROCÉDÉ ET DISPOSITIF POUR LA TRANSFORMATION DE COMBUSTIBLES

(30) Priorität: 20.09.2017 DE 102017121841
(43) Veröffentlichungstag der Anmeldung: 29.07.2020
(73) Patentinhaber: CATALYTIC Power Solutions GmbH, 28217 Bremen (DE)
(72) Erfinder: PÖPPINGHAUS, Andreas Wilhelm, 21244 Buchholz i.d. Nordheide (DE); IPSE, B. Eng. Daniel, 28844 Weyhe (DE)
(74) Vertreter: Tappe, Udo
(86) Internationale Anmeldenummer: PCT/EP2018/075539
(87) Internationale Veröffentlichungsnummer: WO 2019/057856

(56) Entgegenhaltungen:
- JP-A- S61 256 117
- US-A- 6 095 793
- US-A1- 2002 121 080
- US-A1- 2003 200 699
- US-A1- 2004 255 588
- US-A1- 2014 033 728

## Beschreibung

Die Erfindung betrifft eine Vorrichtung, insbesondere einen Brenner, zur Umsetzung von förderfähigen Brennstoffen gemäß Anspruch 1. Des Weiteren betrifft die Erfindung ein Verfahren zur Umsetzung von förderfähigen Brennstoffen gemäss Anspruch 7.

Eine solche Vorrichtung und ein Verfahren gemäß des Oberbegriffs der Ansprüche 1 und 7 sind beispielsweise aus der US 2002/121080 A1 bekannt. Die dort gezeigte Brennkammer hat eine erste Verbrennungszone, welcher Brennstoff zugeführt und in welcher der Brennstoff umgesetzt wird, sowie eine zweite und eine dritte Verbrennungszone, denen jeweils Brennstoff zugeführt und in denen der Brennstoff umgesetzt wird. Die Verbrennungszonen sind in Strömungsrichtung aufeinander folgend angeordnet, wobei die Volumina der aufeinander folgenden Verbrennungszonen ansteigen. Brennstoff und Luft werden der Brennkammer durch Mischkanäle zugeführt.

Unter dem Begriff förderfähiger Brennstoff sind im Rahmen der vorliegenden Erfindung vor allem Fluide, insbesondere hochkalorische oder niederkalorische Brenngase oder vergaste Flüssigbrennstoffe zu verstehen. Niederkalorische Gase umfassen unter anderem Biogase und Deponiegase mit einem geringen Methananteil und einem geringen Heizwert.

Vorrichtungen und Verfahren zur Umsetzung von Brennstoffen finden insbesondere in Gasturbinen Anwendung. Eine Gasturbine besteht üblicherweise aus einer Turbine, einer Brennkammer und einem vorgeschalteten Verdichter. Für die Umsetzung der Brennstoffe wird ein Gemisch aus komprimierter Luft und Brennstoff in die Brennkammer geleitet, dort vermischt und anschließend entzündet. Die aus der Brennkammer austretenden heißen Gase werden zu der Turbine geleitet und treiben diese an. Auf diese Weise kann thermische Energie in mechanische Energie umgewandelt werden.

In der Regel werden Gasturbinen mit Erdgas betrieben. Je nach Herkunftsort kann die Zusammensetzung und somit die Gasqualität des Erdgases variieren. Es besteht jedoch grundsätzlich zu einem hohen Anteil aus Methan, weshalb es einen hohen Heizwert hat und auch als hochkalorisches Gas bezeichnet wird. Gase mit einem deutlich geringeren Volumenanteil an Methan und einem entsprechend deutlich geringeren Heizwert werden als niederkalorische Gase bezeichnet.

Hoch- und niederkalorische Gase fallen insbesondere als Begleitgase bei der Gewinnung von Erdöl an. Da die Förderung von Erdöl oft in abgelegenen Gegenden stattfindet, ist es häufig nicht rentabel Pipelines anzulegen, welche die Gase abführen. Für die Betreiber stellt es sich deshalb teilweise als wirtschaftlich vorteilhafter heraus, die Begleitgase abzufackeln. Die niederkalorischen Gase sind jedoch bedingt durch ihren im Vergleich zu Erdgas geringen Methananteil nur schwer bis gar nicht zündfähig.

Ebenfalls entstehen niederkalorische Gase bei der anaeroben Zersetzung von organischem Material, beispielsweise Klärschlamm oder Gülle, auf Deponien. Trotz des vergleichsweise geringeren Methananteils der niederkalorischen Gase stellt es eine Umweltbelastung dar, diese methanhaltigen Gase ungenutzt in die Atmosphäre entweichen zu lassen. Dies wird insbesondere in der EU Richtlinie 1999/31/EG verdeutlicht, nach welcher Methangase, die auf Deponien entstehen, aufgenommen und behandelt werden müssen, um die Schädigung des Klimas zu reduzieren. Aufgrund ihres geringen Heizwertes waren niederkalorische Gase bisher nur schwer oder gar nicht auf wirtschaftliche Weise verwertbar. Bedingt durch die geringe oder fehlende Zündfähigkeit der niederkalorischen Gase, wäre beispielsweise eine Anreicherung der Gase mit Methan oder ein großer Aufwand an Energie notwendig, um sie beispielsweise für die Verwendung in Gasturbinen potentiell nutzbar zu machen. Bisher verläuft die Entsorgung niederkalorischer Deponiegase daher oft ohne energetische Nutzung oder ist sogar mit einem wesentlichen Energieaufwand verbunden.

Es ist daher die der Erfindung zugrunde liegende Aufgabe, eine Vorrichtung und ein Verfahren der eingangs genannten Art anzugeben, bei dem auch niederkalorische, an sich schwer zündfähige Gase als Brennstoff wirtschaftlich umsetzbar sind.

Die der Erfindung zugrunde liegende Aufgabe wird bei einer Vorrichtung der eingangs genannten Art dadurch gelöst, dass eine Überströmleitung vorgesehen ist, wobei die Überströmleitung mit einem ersten Ende mit dem druckhaltenden Gehäuse, und mit einem zweiten Ende mit einem Zustrombereich fluidverbunden ist, wobei der Überströmleitung mindestens ein Regelventil zum Regeln eines Gasflusses aus dem druckhaltenden Gehäuse durch die Überströmleitung in den Zustrombereich zugeordnet ist. Bei einem Verfahren der eingangs genannten Art wird die der Erfindung zugrunde liegende Aufgabe dadurch gelöst, dass von einem Verdichter komprimierte Luft als Luftmassenstrom in ein, den Reaktionskörper umgebendes druckhaltendes Gehäuse geleitet wird, wobei mittels einer Überströmleitung ein Teil des Luftmassenstroms zu mindestens einem Zustrombereich, insbesondere in dem Reaktionskörper geleitet und der Gasfluss in der Überströmleitung in mindestens einen Zustrombereich mittels mindestens eines Regelventils gesteuert oder geregelt wird.

Hieraus ergibt sich der Vorteil, dass die in dem ersten Reaktionsbereich bei der Umsetzung von Brennstoff entstandene Wärmemenge genutzt werden kann, um weiteren Brennstoff auf eine Mindestreaktionstemperatur zur Umsetzung des weiteren Brennstoffs in dem weiteren Reaktionsbereich zu erhitzen. Auf diese Weise kann ein quasi unbegrenzter Stoffumsatz ermöglicht werden, bei dem einzig die Energie zur Erwärmung des Brennstoffs zugeführt werden muss, der in dem ersten Reaktionsbereich umgesetzt wird. Darüber hinaus wird die Luft, welche in das den Reaktionskörper umgebende druckhaltende Gehäuse geleitet wird, die durch den Reaktionskörper abgestrahlte Wärme aufnehmen. Auf diese Weise kann mehr Brennstoff in den einzelnen, aufeinander folgenden Reaktionsbereichen umgesetzt werden und somit eine hohe Effizienz des Brenners erreicht werden.

Unter einem druckhaltenden Gehäuse ist im Zusammenhang mit der Erfindung ein gasdichtes Gehäuse zu verstehen, das nur an definierten Einlässen und Auslässen offen ist, so dass in seinem Inneren ein bestimmter Druck aufrechterhalten werden kann. Unter einer Überströmleitung ist im Zusammenhang mit der Erfindung eine Leitung zu verstehen, mittels welcher Luft und/oder Brennstoff von einem Bereich in einen anderen Bereich überführt werden kann.

Bei einer Weiterbildung hat die Vorrichtung mehrere weitere Reaktionsbereiche denen jeweils Brennstoff zugeführt und in denen jeweils der Brennstoff umgesetzt wird. Die mehreren weiteren Reaktionsbereiche sind insbesondere kaskadenartig aufeinander folgend angeordnet. Vorzugsweise können die mehreren weiteren Reaktionsbereiche in Längsrichtung eines Reaktionskörpers, beginnend an einem ersten Ende des Reaktionskörpers, dem ersten Reaktionsbereich nachgeschaltet angeordnet sein. Die Volumina in Stromrichtung aufeinander folgender Reaktionsbereiche steigen vorzugsweise an. Auf diese Weise kann die Anzahl der Reaktionsbereiche an den jeweiligen Anwendungsfall angepasst werden, insbesondere bis das Reaktionsprodukt aus den Reaktionsbereichen in seiner Masse den Eingangsbedingungen einer Turbine entspricht.

Bei einer vorteilhaften Ausgestaltung ist dem Reaktionsbereich mindestens ein Zustrombereich zugeordnet. Insbesondere ist dem Reaktionsbereich mindestens ein Zustrombereich vorgeschaltet. Vorzugsweise ist dem Reaktionsbereich mindestens ein Zustrombereich stromaufwärts vorgeschaltet. Besonders bevorzugt steigen die Volumina in Stromrichtung aufeinander folgender Zustrombereiche an. In einen Zustrombereich kann jeweils ein Gemisch aus Luft und Brennstoff zugeführt werden. Die Anzahl der Zustrombereiche kann mindestens der Anzahl der Reaktionsbereiche entsprechen. Durch die Zufuhr von Gasen in dem Zustrombereich kann ein Gasgemisch erzeugt werden, welches anschließend in dem Reaktionsbereich zur Reaktion gebracht werden kann. In einer alternativen Ausgestaltung können einem Reaktionsbereich mehrere, insbesondere jeweils zwei Zustrombereiche zugeordnet sein. Insbesondere kann die Zufuhr von Luft in jeweils einem, dem Reaktionsbereich zugeordneten Zustrombereich erfolgen und die Zufuhr von Brennstoff in dem jeweils anderen, dem Reaktionsbereich zugeordneten Zustrombereich erfolgen. Auf diese Weise kann eine unkontrollierte Umsetzung des Gasgemisches vermieden werden. Dabei kann die Anzahl der Zustrombereiche insbesondere doppelt so groß sein wie die Anzahl der Reaktionsbereiche.

Bei einer vorteilhaften Ausgestaltung ist dem Reaktionsbereich mindestens ein Mischbereich zugeordnet. Insbesondere ist dem Reaktionsbereich mindestens ein Mischbereich vorgeschaltet. Vorzugsweise ist dem Reaktionsbereich mindestens ein Mischbereich stromaufwärts vorgeschaltet. Bei einer Weiterbildung ist dem Zustrombereich mindestens ein Mischbereich zugeordnet. Insbesondere ist dem Zustrombereich mindestens ein Mischbereich nachgeschaltet. Vorzugsweise ist dem Zustrombereich mindestens ein Mischbereich stromabwärts nachgeschaltet. Auf diese Weise können sich die im Zustrombereich zugeführten Gase im Mischbereich mit dem sich bereits in dem Reaktionskörper befindenden Gas vermischen und anschließend in den Reaktionsbereich strömen, wo sie zur Reaktion gebracht werden können. Insbesondere ist der zugeordnete Mischbereich zwischen dem Reaktionsbereich und dem zugeordneten Zustrombereich angeordnet. Die Volumina in Stromrichtung aufeinander folgender Mischbereiche steigen vorzugsweise an.

Bei einer Weiterbildung hat der Reaktionsbereich mindestens eine offen-zellige und/oder mit insbesondere feinen Kanälen durchzogene Struktur. Die Verwendung von offen-zelligen und/oder mit insbesondere feinen Kanälen durchzogenen Strukturen in den Reaktionszonen führt zu einer viskosen Dämpfung, was sich positiv auf das Schwingungsverhalten des Gasstroms auswirkt (viscous damping). Alternativ hat der Reaktionsbereich ein Gewebe aus einem keramischen oder aus einem metallischen Werkstoff. Der Reaktionsbereich kann als Katalysator ausgebildet sein. Auf diese Weise kann ein Gasgemisch aus Luft und Brennstoff in dem Reaktionsbereich mittels des Katalysators zur Reaktion gebracht und exotherm umgesetzt werden. Insbesondere hat der Reaktionsbereich katalytische Eigenschaften und/oder weist ein Katalysatormaterial auf. Alternativ kann ein Gewebe aus einem keramischen oder metallischen Werkstoff ohne katalytische Eigenschaften vorgesehen sein. Der Katalysator kann als Wabenkeramik oder als gewickelte Folien mit darauf angeordneten Profilen ähnlich Wellpappe ausgebildet sein.

Bei einer vorteilhaften Ausgestaltung hat die Vorrichtung einen Reaktionskörper und/oder ein insbesondere druckhaltendes Gehäuse. Der Reaktionskörper kann kaskadenartig aufgebaut sein. Insbesondere ist der Reaktionskörper ganz oder zumindest teilweise in dem druckhaltenden Gehäuse angeordnet und/oder ist selbst druckhaltend ausgebildet. Der Reaktionskörper kann von dem druckhaltenden Gehäuse umschlossen sein. Von einem Verdichter komprimierte Luft kann in dem druckhaltenden Gehäuse entlang dem Reaktionskörper strömen. Auf diese Weise kann der Reaktionskörper gekühlt werden und verhindert werden, dass das druckhaltende Gehäuse zu hohen Temperaturen ausgesetzt wird. Ebenfalls kann sich die Luft durch die vom Reaktionskörper abgegebene Wärme erwärmen. Vorzugsweise kann die erwärmte Luft der Vorrichtung, insbesondere dem Brenner als Primärluft zugeführt werden.

Bei einer Weiterbildung ist dem Reaktionskörper und/oder dem druckhaltenden Gehäuse ein Verdichter zugeordnet. Der Verdichter dient zum Komprimieren von Luft. Mittels des Verdichters kann die Druckenergie der Luft gesteigert werden. Insbesondere ist der Verdichter dem Reaktionskörper vorgeschaltet.

Bei einer Weiterbildung hat die Vorrichtung eine Wärmequelle. Insbesondere ist die Wärmequelle als ein Gaserhitzer, ein Pilotbrenner oder ein Plasmabrenner ausgebebildet. Alternativ kann eine Begleitheizung für Katalysatoren als Wärmequelle dienen. Die Wärmequelle ist vorzugsweise einem stromaufwärtigen ersten Ende des Reaktionskörpers zugeordnet. Die Wärmequelle ist dem ersten Reaktionsbereich vorgeschaltet. Mittels der Wärmequelle können Luft oder Brennstoff, die dem Reaktionskörper an einem ersten Ende zugeführt werden erhitzt werden. Auf diese Weise können auch niederkalorische, an sich schwer zündfähige Gase als Brennstoff für die Vorrichtung, insbesondere den Brenner vorgesehen sein.

Bei einer vorteilhaften Ausgestaltung ist eine Überströmleitung mit einem ersten Ende an dem druckhaltenden Gehäuse oder an dem Verdichter angeordnet. Insbesondere ist eine Überströmleitung mit einem ersten Ende mit dem druckhaltenden Gehäuse oder mit dem Verdichter fluidverbunden. Auf diese Weise kann Luft aus dem druckhaltenden Gehäuse in die Überströmleitung gelangen. Mit einem zweiten Ende ist die Überströmleitung an einem Zustrombereich und/oder an der Wärmequelle angeordnet. Insbesondere ist eine Überströmleitung mit einem zweiten Ende mit dem Zustrombereich und/oder mit der Wärmequelle fluidverbunden. Dabei ist jeweils eine Überströmleitung jeweils einem Zustrombereich zugeordnet. Eine weitere Überströmleitung kann einem weiteren Zustrombereich zugeordnet sein. Mittels der Überströmleitung kann Luft in einen Zustrombereich geleitet werden. Alternativ kann mittels der Überströmleitung ein Gasgemisch aus Luft und Brennstoff in einen Zustrombereich geleitet werden. Insbesondere kann eine Brennstoffleitung mit der Überstromleitung fluidverbunden sein. Auf diese Weise kann Brennstoff in die Überströmleitung geleitet werden. Somit kann bereits in der Überströmleitung ein Gasgemisch aus Luft und Brennstoff erzeugt werden. In einer weiteren Ausführungsform ist ein zweites Ende der Überströmleitung an der Wärmequelle angeordnet. Dabei ist die Überströmleitung der Wärmequelle zugeordnet. Mittels der Überströmleitung kann Luft, insbesondere aus dem druckhaltenden Gehäuse zu der Wärmequelle geleitet werden.

Bei einer Weiterbildung ist eine Brennstoffleitung zur Bereitstellung eines Brennstoffes mit einem ersten Ende einer Brennstoffquelle zugeordnet. Insbesondere ist die Brennstoffleitung mit einer Brennstoffquelle fluidverbunden. Auf diese Weise kann Brennsoff in die Brennstoffleitung geleitet werden. Mit mindestens einem weiteren Ende ist die Brennstoffleitung an einer einem Zustrombereich zugeordneten Überströmleitung angeordnet. Insbesondere ist die Brennstoffleitung mit mindestens einem weiteren Ende mit einer einem Zustrombereich zugeordneten Überströmleitung fluidverbunden. Auf diese Weise kann der Brennstoff in die Überströmleitung geleitet werden, um dort mit Luft vermischt zu werden. In einer weiteren Ausführungsform ist die Brennstoffleitung mit mindestens einem weiteren Ende ist an einem Zustrombereich angeordnet. Insbesondere ist die Brennstoffleitung mit mindestens einem weiteren Ende mit einem Zustrombereich fluidverbunden. Auf diese Weise kann der Brennstoff direkt und ohne ein Vermischen mit Luft in einen Zustrombereich geleitet werden. Die Vorrichtung kann mehrere Brennstoffleitungen haben.

Bei einer Weiterbildung ist mindestens ein Regelventil zum Regeln eines Gasflusses einer Überströmleitung zugeordnet. In einer weiteren Ausführungsform ist mindestens ein Regelventil einer Brennstoffleitung zugeordnet. Insbesondere kann die Anzahl der Regelventile der Summe der Anzahl an Überströmleitungen und Brennstoffleitungen entsprechen. Das Regelventil kann den Gasfluss in der Überströmleitung und/oder in der Brennstoffleitung regulieren. Die Vorrichtung kann mehrere Regelventile haben.

Bei einer weiteren und auch unabhängig und eigenständig von der vorliegenden Erfindung denkbaren Ausführungsform ist an dem stromabwärtigen Ende der Vorrichtung eine Turbine angeordnet. Vorzugsweise hat ein von dem ersten Ende des Reaktionskörpers abgewandtes zweites, insbesondere der Turbine zugeordnetes Ende eine Ausströmöffnung. Insbesondere ist die Ausströmöffnung als eine Zugangsöffnung zu der Turbine ausgebildet. Durch die Ausströmöffnung kann das, insbesondere hochtemperierte Gasgemisch in die Turbine geleitet werden. In der Turbine kann thermische Energie in mechanische Energie umgewandelt werden.

Bei einer vorteilhaften Ausführungsform des Verfahrens werden Brennstoff und/oder Luft in Stromrichtung durch die in einem Reaktionskörper angeordneten Reaktionsbereiche geleitet. Brennstoff und/oder Luft werden in Stromrichtung durch die in einem Reaktionskörper angeordneten Reaktionsbereiche vorzugsweise hin zu einer Ausströmöffnung geleitet. Brennstoff und/oder Luft werden in Stromrichtung durch die in einem Reaktionskörper angeordneten Reaktionsbereiche vorzugsweise hin zu einer Ausströmöffnung insbesondere durch die Ausströmöffnung als Zugangsöffnung zu einer Turbine geleitet. Die Ausströmöffnung kann insbesondere eine Zugangsöffnung zu einer Turbine sein. Auf diese Weise können die aus dem Reaktionskörper austretenden heißen Gase direkt in die Turbine geleitet werden.

Bei einer Weiterbildung des Verfahrens werden Brennstoff und/oder Luft in mindestens einen Zustrombereich in dem Reaktionskörper eingeleitet. Auf diese Weise kann der Massenstrom des Gasgemisches exakt eingestellt werden.

Bei einer vorteilhaften Ausführungsform des Verfahrens werden Brennstoff und/oder Luft in einem Mischbereich in dem Reaktionskörper gemischt. In dem Mischbereich können die in einem Zustrombereich zugeführten Gase mit den, dem Reaktionskörper bereits zugeführten Gasen vermischt werden. Auf diese Weise kann ein homogenes Gasgemisch erzeugt werden.

Bei einer Weiterbildung werden hochkalorische und/oder niederkalorische Brenngase als Brennstoff genutzt. In einer weiteren Ausführungsform werden alternativ oder zusätzlich vergaste Flüssigbrennstoffe als Brennstoffe genutzt. Die Brennstoffe können einen hohen oder einen niedrigen Heizwert und/oder Wobbeindex haben. Insbesondere können der Heizwert und/oder der Wobbeindex nahe und/oder unterhalb der Zündgrenze liegen.

Bei einer vorteilhaften Ausführungsform des Verfahrens erfolgt die Umsetzung des Brennstoffs flammlos. Insbesondere erfolgt die Umsetzung des Brennstoffs katalytisch. Auf diese Weise können auch Brenngase als Brennstoff genutzt werden, die nur schwer oder gar nicht zündfähig sind. Insbesondere werden dazu Brennstoff und/oder Luft mittels einer als ein Gaserhitzer, ein Pilotbrenner oder ein Plasmabrenner ausgebebildeten Wärmequelle, insbesondere vor der Umsetzung erhitzt.

Bei einer vorteilhaften Ausführungsform werden mittels der Wärmequelle Brennstoff und/oder Luft auf eine Temperatur größer einer für die Umsetzung eines Gasgemisches aus Luft und dem Brennstoff notwendigen Mindestreaktionstemperatur erwärmt. Vorzugsweise werden mittels der Wärmequelle Brennstoff und/oder Luft auf eine Temperatur größer oder gleich 100° C, besonders bevorzugt größer oder gleich 500° C erwärmt. Die Temperatur kann in Abhängigkeit von dem Brennstoff gewählt werden. Bei einem hohen Anteil von Propan, Butan oder Wasserstoff (H₂) kann auch eine Temperatur kleiner 100° C ausreichen. Insbesondere wird die Temperatur kleiner als 650° C gewählt, da bei höheren Temperaturen eine Entzündung und eine Verbrennung mit Flamme stattfinden können. Der erwärmte Brennstoff und/oder die erwärmte Luft können in einen ersten Zustrombereich strömen. Insbesondere kann die Strömungsgeschwindigkeit der Luft in dem Reaktionskörper bei etwa 1 m/s bis 3 m/s liegen. Die Strömungsgeschwindigkeit eines Gasgemisches oder des Brennstoffs in dem Reaktionskörper kann ebenfalls bei etwa 1 m/s bis 3 m/s liegen. Aufgrund der, durch die Strömungsgeschwindigkeit bedingte lange Verweilzeit des Gasgemisches in den Reaktionszonen wird die Bildung von Kohlenstoffmonoxid (CO) stark reduziert. Die Austauschrate in dem Reaktionskörper kann 30.000 h⁻¹ betragen.

Bei einer Weiterbildung des Verfahrens wird Luft mittels eines Verdichters komprimiert. Insbesondere wird der Verdichter dem Reaktionskörper und/oder den Zustrombereichen vorgeschaltet. Die vom Verdichter komprimierte Luft kann als Luftmassenstrom in ein den Reaktionskörper umgebendes druckhaltendes Gehäuse geleitet werden. Die vom Verdichter komprimierte Luft wird vorzugsweise entgegen der Stromrichtung in dem Reaktionskörper geleitet. Insbesondere wird die vom Verdichter komprimierte Luft entlang dem Reaktionskörper in dem druckhaltenden Gehäuse geleitet. Auf diese Weise kann die Luft durch die vom Reaktionskörper abgegebene Wärme erwärmt werden und gleichzeitig den Reaktionskörper kühlen. Ebenfalls wird auf diese Weise verhindert, dass das druckhaltende Gehäuse zu hohen Temperaturen ausgesetzt wird.

Bei einer weiteren Ausführungsform des erfindungsgemäßen Verfahrens wird mittels einer Überströmleitung ein Teil des Luftmassenstroms als Primärluft zu der, insbesondere an einem ersten Ende des Reaktionskörpers angeordneten Wärmequelle geleitet. Alternativ wird mittels einer Überströmleitung ein Teil des Luftmassenstroms als Sekundärluft zu mindestens einem Zustrombereich insbesondere in dem Reaktionskörper geleitet. Bei einer alternativen Ausführungsform wird mittels einer Überströmleitung ein Gasgemisch aus einem Teil des Luftmassenstroms und Brennstoff zu mindestens einem Zustrombereich, insbesondere in dem Reaktionskörper geleitet. Mittels der Überströmleitung kann ein Gasgemisch aus Luft und Brennstoff erzeugt werden. Insbesondere kann eine Brennstoffleitung mit einer Überströmleitung fluidverbunden werden. Auf diese Weise kann Brennstoff in die Luft führende Überströmleitung geführt werden und somit bereits in der Überströmleitung ein Gasgemisch aus Luft und Brennstoff erzeugt werden.

Bei einer Weiterbildung wird Brennstoff mittels einer Brennstoffleitung in mindestens einen Zustrombereich, insbesondere in dem Reaktionskörper geleitet. In dem Zustrombereich kann der Brennstoff anschließend mit Luft oder mit einem Gasgemisch aus Luft und Brennstoff vermischt werden. Bei einer weiteren Ausführungsform wird Brennstoff mittels einer Brennstoffleitung zu einer Wärmequelle geleitet.

Bei einer Weiterbildung des Verfahrens wird ein Gasgemisch aus Brennstoff und Luft in dem Zuströmbereich erzeugt. Brennstoff und Luft werden dem Zustrombereich mittels der Überströmleitung und/oder der Brennstoffleitung zugeführt, bis insbesondere die Temperatur des Gasgemisches in dem Reaktionskörper der Mindestreaktionstemperatur des Gasgemisches entspricht oder größer ist. Vorzugsweise ist die Temperatur des Gasgemisches in dem Reaktionskörper größer oder gleich 100° C, besonders bevorzugt größer oder gleich 500° C. Die Temperatur kann in Abhängigkeit von dem Brennstoff gewählt werden. Bei einem hohen Anteil von Propan, Butan oder Wasserstoff (H₂) kann auch eine Temperatur kleiner 100° C ausreichen. Insbesondere wird die Temperatur kleiner als 650° C gewählt, da bei höheren Temperaturen eine Entzündung und eine Verbrennung mit Flamme stattfinden können. Alternativ können Brennstoff und Luft sequenziell in zwei voneinander separierte Zustrombereiche eingebracht werden, um eine unkontrollierte Umsetzung des Gasgemisches zu vermeiden.

Bei einer weiteren Ausführungsform des erfindungsgemäßen Verfahrens wird mittels mindestens eines Regelventils der Gasfluss des Brennstoffs und/oder der Luft in einer Überströmleitung zu einer Wärmequelle und/oder in mindestens einen Zustrombereich gesteuert oder geregelt. Bei einer Weiterbildung wird mittels mindestens eines Regelventils der Gasfluss des Brennstoffes in mindestens einer Brennstoffleitung zu einer Wärmequelle und/oder in mindestens einen Zustrombereich geregelt. Insbesondere kann jeweils ein Regelventil genutzt werden, um den Zustrom des Luftmassenstroms und/oder des Brennstoffes in jeweils einer Überströmleitung und/oder in jeweils einer Brennstoffleitung zu regulieren.

Gemäß der Erfindung wird das Gasgemisch aus Brennstoff und Luft in dem Reaktionsbereich durch eine Reaktion an Oberflächen und/oder eine katalytische Wirkung und/oder heterogene Katalysatoren umgesetzt. Insbesondere kann das Gasgemisch aus Luft und Brennstoff in dem Reaktionsbereich exotherm umgesetzt werden. Auf diese Weise wird Wärme freigesetzt.

Bei einer Weiterbildung des Verfahrens liegt der Anteil an Sauerstoff in dem Gasgemisch aus Luft und Brennstoff in dem Reaktionsbereich in einem Bereich von acht Volumenprozent bis zwanzig Volumenprozent. Vorzugsweise liegt der Anteil an Sauerstoff in dem Gasgemisch aus Luft und Brennstoff in dem Reaktionsbereich in einem Bereich von zehn Volumenprozent bis zwanzig Volumenprozent, besonders bevorzugt bei fünfzehn Volumenprozent. Bei einem erforderlichem Sauerstoffanteil des Gasgemisches in den Reaktionsbereichen von fünfzehn Volumenprozent ist eine Verwertung von Brenngasen mit einem Methangehalt ab fünf Volumenprozent möglich (Heizwert = 1,3 MJ/kg). Insbesondere kann der Anteil an Sauerstoff so groß sein, das bei der Umsetzung des Brennstoffs ein leichter Sauerstoffüberschuss (λ ≥ 1) verbleibt. Bei einer Weiterbildung wird das Gasgemisch aus einer Ausströmöffnung in dem Reaktionskörper heraus geleitet. Insbesondere wird das Gasgemisch aus einer Ausströmöffnung in dem Reaktionskörper heraus zu einer Turbine hin geleitet. Die Austrittstemperatur des Gasgemisches aus der Ausströmöffnung in die Turbine liegt insbesondere in einem Bereich von 1000° C bis 1100° C. Aufgrund dieser vergleichsweise niedrigen Austrittstemperatur wird die Bildung nitroser Gase (NOₓ) stark reduziert.

Bei einer Weiterbildung werden mindestens zwei, insbesondere als Brenner ausgebildete erfindungsgemäße Vorrichtungen parallel geschaltet. Auf diese Weise kann die Leistung der insbesondere als Brenner ausgebildeten Vorrichtungen erhöht werden, ohne dass die Abmessungen der einzelnen Stufen zu groß werden. Insbesondere lässt sich so ein baukastenartiger, modularer Aufbau erreichen.

Mindestens zwei erfindungsgemäße Vorrichtungen können ein System zur Umsetzung von Brennstoffen bilden. Insbesondere sind die erfindungsgemäßen Vorrichtungen zur Bildung des Systems parallel geschaltet. Durch die Teilung des Gasstroms zwischen zwei Stufen und der anschließenden Parallelschaltung der Folgestufen können sehr große Leistungen der insbesondere als Brenner ausgebildeten Vorrichtung realisiert werden (Modular Combustor Design). Es lassen sich Konfigurationen mit Leistungen von wenigen kW bis mehreren MW realisieren. Das System kann mehrere weitere, insbesondere parallel geschaltete erfindungsgemäße Vorrichtungen zur Umsetzung von Brennstoffen haben. Auf diese Weise kann die Anzahl der insbesondere als Brenner ausgebildete Vorrichtungen an den jeweiligen Anwendungsfall angepasst werden, insbesondere bis das Reaktionsprodukt aus den Vorrichtungen in seiner Masse den Eingangsbedingungen der Turbine entspricht. Es ergibt sich ein baukastenartiger, modularer Aufbau.

Die erfindungsgemäße Vorrichtung und/oder das erfindungsgemäße Verfahren werden zur flammlosen Umsetzung von Brennstoffen genutzt. Insbesondere können die erfindungsgemäße Vorrichtung und/oder das erfindungsgemäße Verfahren zur flammlosen Umsetzung von niederkalorischen Brennstoffen genutzt werden. Die erfindungsgemäße Vorrichtung und/oder das erfindungsgemäße Verfahren können insbesondere in Kombination mit einer Gasturbine genutzt werden. Insbesondere kann die Vorrichtung als Brenner ausgebildet sein.

Für die Temperatur des Reaktionskörpers kann sich stromabwärts eine Hysterese zwischen einer Endtemperatur des Mischbereichs und der Austrittstemperatur des Reaktionsbereichs ergeben. Die Temperatur kann dabei hoch genug sein, um Kohlenstoffmonoxid umzusetzen und niedrig genug sein, um die Bildung von nitrosen Gasen (NOₓ) zu vermeiden. Auf diese Weise ergeben sich sehr gute Abgaswerte. In Abhängigkeit vom Brennstoff kann die Eintrittstemperatur des Gasgemisches in einen Reaktionsbereich bei etwa 100° C bis 500° C liegen. Die Temperatur sollte kleiner als 650° C sein, da bei höheren Temperaturen eine Entzündung und eine Verbrennung mit Flamme stattfinden können.

Durch die sequenzielle Zufuhr von Luft und Brennstoff in den Zustrombereichen kann mit zunehmender Anzahl an Zustrombereichen ein in seinem Massenvolumen zunehmender Gasstrom erzeugt werden, korrelierend mit dem, stromabwärts, beginnend an dem der Wärmequelle zugeordneten ersten Ende des Reaktionskörpers, steigenden Volumen der Zustrom-, Misch- und Reaktionsbereiche. Dabei kann vorgesehen sein, dass der Massenstrom exponentiell ansteigt.

Durch die stufenweise Konfiguration kann ein Regelbereich der Vorrichtung von 100 % bis annähernd 0 % Leistung erreicht werden. Diese Variation kann durch sequenzielles Reduzieren der Zugabe an Brennstoff in den einzelnen Zustrombereichen erfolgen, beginnend bei dem letzten Zustrombereich. Alternativ kann die Leistung der Vorrichtung durch Hinzufügen oder Entfernen einzelner Zustrom-, Misch- und Reaktionsbereiche an den Anwendungsfall angepasst werden. Da nur ein Teil des Gesamtmassenstroms einer Wärmequelle zugeführt wird, kann die benötigte Energie für die Wärmequelle mittels der erfindungsgemäßen Vorrichtung und/oder dem erfindungsgemäßen Verfahren reduziert werden.

Durch die Reduzierung der Zugabe an Brennstoff in dem letzten Zustrombereich können die Betriebsbedingungen in den vorrangehenden Zustrombereichen weitestgehend unbeeinflusst bleiben. Auf diese Weise wird ein stabiles Betriebsverhalten erreicht. Die Dynamik der Vorrichtung ist damit bei einer Reduzierung oder einer Steigerung der Leistung nicht von der gesamten Brennerkonfiguration, sondern lediglich von dem letzten im Betrieb befindlichen Zustrombereich abhängig.

Nachfolgend werden Ausführungsbeispiele der Erfindung anhand der Figuren näher erläutert. Es zeigen:

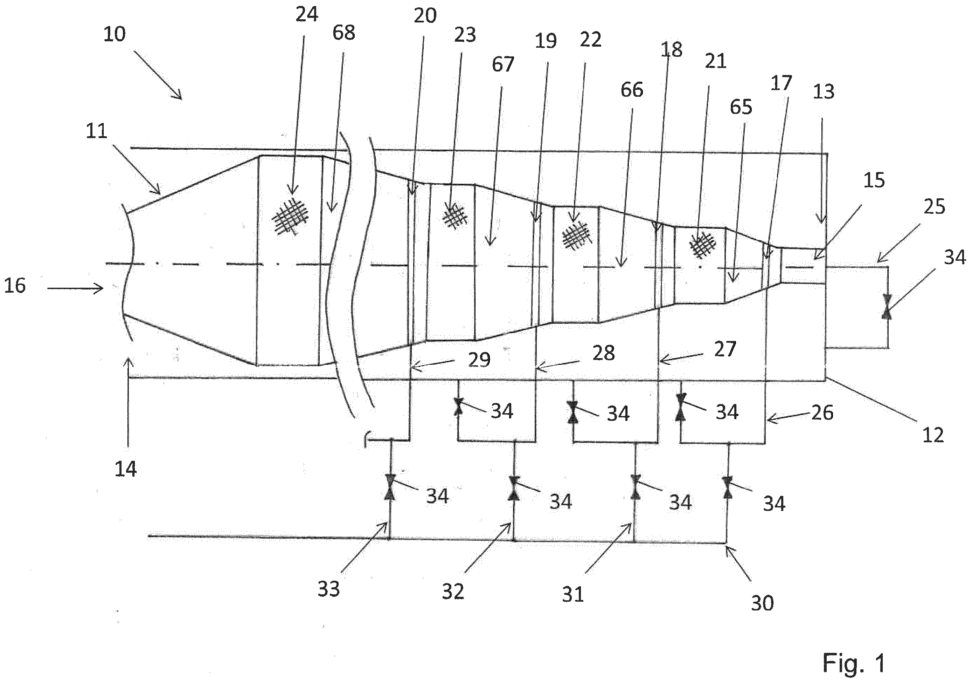

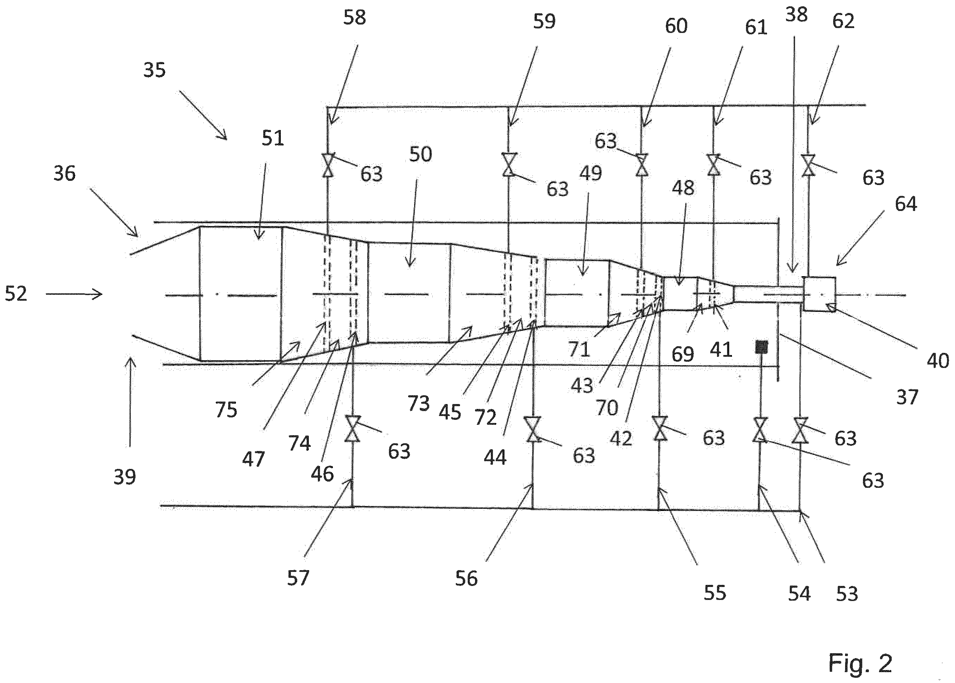

- Fig. 1: einen schematischen Längsschnitt eines ersten Brenners mit den Erfindungsmerkmalen.

Fig. 1 zeigt einen schematischen Längsschnitt eines Brenners 10 mit den Erfindungsmerkmalen. Der Brenner 10 ist bei dem Ausführungsbeispiel als Brenner 10 zur Umsetzung von Brennstoff für eine in der Figur nicht dargestellte Gasturbine ausgebildet. Bei dem Ausführungsbeispiel dienen insbesondere niederkalorische Gase als Brennstoff für den Brenner 10.

Der Brenner 10 hat einen Reaktionskörper 11 und ein druckhaltendes Gehäuse 12. Der Brenner 10 hat ein erstes Ende 13 und ein von dem ersten Ende 13 abgewandtes zweites Ende 14. An dem ersten Ende 13 des Reaktionskörpers 11 ist eine Wärmequelle 15 angeordnet. Bei dem Ausführungsbeispiel ist die Wärmequelle 15 als ein Gaserhitzer 15 ausgebildet. Alternativ ist die Nutzung eines Pilotbrenners oder eines Plasmabrenners als Wärmequelle möglich. Weiter ist an dem ersten Ende 13 des Reaktionskörpers 11, im Übergang zu der Wärmequelle 15 eine in der Figur nicht dargestellte Ringdüse angeordnet. In einer anderen Ausführungsform ist denkbar, dass dem ersten Ende 13 des Reaktionskörpers 11 ein elektrischer Anschluss zugeordnet ist.

Der Reaktionskörper 11 hat mehrere Zustrombereiche 17, 18, 19, 20. Bei dem Ausführungsbeispiel hat der Reaktionskörper 11 vier Zustrombereiche 17, 18, 19, 20. In Längsrichtung des Reaktionskörpers 11, beginnend an dem ersten Ende 13 des Reaktionskörpers 11 entspricht dabei der Zustrombereich 17 einem ersten Zustrombereich, der Zustrombereich 18 einem zweiten Zustrombereich, der Zustrombereich 19 einem dritten Zustrombereich und der Zustrombereich 20 einem vierten Zustrombereich.

Weiter hat der Reaktionskörper 11 mehrere Mischbereiche 65, 66, 67, 68. Bei dem Ausführungsbeispiel hat der Reaktionskörper 11 vier Mischbereiche 65, 66, 67, 68. In Längsrichtung des Reaktionskörpers 11, beginnend an dem ersten Ende 13 des Reaktionskörpers 11 entspricht dabei der Mischbereich 65 einem ersten Mischbereich, der Mischbereich 66 einem zweiten Mischbereich, der Mischbereich 67 einem dritten Mischbereich und der Mischbereich 68 einem vierten Mischbereich.

Weiter hat der Reaktionskörper 11 mehrere Reaktionsbereiche 21, 22, 23, 24. Bei dem Ausführungsbeispiel hat der Reaktionskörper 11 vier Reaktionsbereiche 21, 22, 23, 24. In Längsrichtung des Reaktionskörpers 11, beginnend an dem ersten Ende 13 des Reaktionskörpers 11 entspricht dabei der Reaktionsbereich 21 einem ersten Reaktionsbereich, der Reaktionsbereich 22 einem zweiten Reaktionsbereich, der Reaktionsbereich 23 einem dritten Reaktionsbereich und der Reaktionsbereich 24 einem vierten Reaktionsbereich. Die Reaktionsbereiche 21, 22, 23, 24 sind jeweils als Katalysator ausgebildet. Bei dem Ausführungsbeispiel haben die Reaktionsbereiche 21, 22, 23, 24 eine mit feinen Kanälen durchzogene Struktur, die in der Figur jeweils durch eine Schraffur angedeutet ist.

In einer alternativen Ausführungsform kann der Reaktionskörper 11 eine andere Anzahl an Zustrombereichen 17, 18, 19, 20, Mischbereichen 65, 66, 67, 68 und Reaktionsbereichen 21, 22, 23, 24 haben.

Bei dem Ausführungsbeispiel entsprechen die Anzahl an Zustrombereichen 17, 18, 19, 20 und die Anzahl an Mischbereichen 65, 66, 67, 68 jeweils der Anzahl an Reaktionsbereichen 21, 22, 23, 24. Jeweils ein Zustrombereich 17, 18, 19, 20 und ein Mischbereich 65, 66, 67, 68 sind einem Reaktionsbereich 21, 22, 23, 24 zugeordnet. Bei dem Ausführungsbeispiel ist in Längsrichtung des Reaktionskörpers 11, beginnend an dem ersten Ende 13 des Reaktionskörpers 11, jeweils ein Zustrombereich 17, 18, 19, 20 einem Reaktionsbereich 21, 22, 23, 24 vorgeschaltet angeordnet. Jeweils ein Mischbereich 65, 66, 67, 68 ist jeweils einem Zustrombereich 17, 18, 19, 20 nachgeordnet und jeweils einem, dem jeweiligen Zustrombereich 17, 18, 19, 20 zugeordneten Reaktionsbereich 21, 22, 23, 24 vorgeordnet angeordnet. Auf diese Weise entsteht ein sequentieller Aufbau, mit einer sequentiellen Anordnung in der Reihenfolge von: Wärmequelle 15, Zustrombereich 17, Mischbereich 65, Reaktionsbereich 21, Zustrombereich 18, Mischbereich 66, Reaktionsbereich 22, Zustrombereich 19, Mischbereich 67, Reaktionsbereich 23, Zustrombereich 20, Mischbereich 68, Reaktionsbereich 24.

Beginnend bei dem der Wärmequelle 15 zugeordneten ersten Ende 13 des Reaktionskörpers 11 nimmt das Volumen der mehreren Zustrombereiche 17, 18, 19, 20, der mehreren Mischbereiche 65, 66, 67, 68 und der mehreren Reaktionsbereiche 21, 22, 23, 24 des Reaktionskörpers 11 in Längsrichtung des Reaktionskörpers 11 hin zu dem zweiten Ende 14 des Reaktionskörpers 11 zu. Auf diese Weise ergibt sich ein kaskadenartiger Aufbau des Reaktionskörpers 11. Der Zustrombereich 20 ist somit größer als der Zustrombereich 19, dieser ist größer als der Zustrombereich 18 und dieser wiederum größer als der Zustrombereich 17. Ähnliches gilt für die Mischbereiche 65, 66, 67, 68 und die Reaktionsbereiche 21, 22, 23, 24. Der Mischbereich 68 ist somit größer als der Mischbereich 67, dieser ist größer als der Mischbereich 66 und dieser wiederum größer als der Mischbereich 65. Der Reaktionsbereich 24 ist somit größer als der Reaktionsbereich 23, dieser ist größer als der Reaktionsbereich 22 und dieser wiederum größer als der Reaktionsbereich 21. Die Zustrombereiche 17, 18, 19, 20 und die Mischbereiche 65, 66, 67, 68 haben dabei jeweils eine sich konisch erweiternde Form. Die Reaktionsbereiche 21, 22, 23, 24 sind zylindrisch ausgebildet.

Weiter hat der Reaktionskörper 11 an dem von dem ersten Ende 13 abgewandten zweiten Ende 14 des Reaktionskörpers 11 eine Öffnung 16. Die Öffnung 16 ist als Ausströmöffnung 16 ausgebildet. Die Ausströmöffnung 16 ist einer in der Figur nicht dargestellten Gasturbine zugewandt und mit dieser fluidverbunden.

Dem Brenner 10 ist ein Verdichter vorgeschaltet, der in der Figur ebenfalls nicht dargestellt ist. Der Verdichter ist dem von dem ersten Ende 13 des Reaktionskörpers 11 abgewandten zweiten Ende 14 des Reaktionskörpers 11 zugeordnet. Mittels des Verdichters wird Luft komprimiert und ein Luftmassenstrom erzeugt. Dazu wird die verdichtete Luft vom zweiten Ende 14 her in den Zwischenraum zwischen dem druckhaltenden Gehäuse 12 und dem Reaktionskörper 11 geblasen.

Weiter hat der Brenner 10 Überströmleitungen 25, 26, 27, 28, 29. Bei dem Ausführungsbeispiel hat der Brenner 10 fünf Überströmleitungen 25, 26, 27, 28, 29. Jeweils ein erstes Ende der Überströmleitungen 25, 26, 27, 28, 29 ist mit dem druckhaltenden Gehäuse 12 verbunden, insbesondere fluidverbunden. Die Überströmleitung 25 ist an einer Seite des druckhaltenden Gehäuses 12 angeschlossen, die dem ersten Ende des Reaktionskörpers 11 zugeordnet ist. Die Überströmleitung 25 ist als Primärluft-Überströmleitung ausgebildet. Ein zweites Ende der Überströmleitung 25 ist an dem der Wärmequelle 15 zugeordneten ersten Ende 13 des Reaktionskörpers 11 angeschlossen. Die Überströmleitungen 26, 27, 28, 29 sind mit einer Seite an dem druckhaltenden Gehäuse 12 angeschlossen, welche sich in Längsrichtung des Reaktionskörpers erstreckt. Das jeweilige zweite Ende der Überströmleitungen 26, 27, 28, 29 ist jeweils an einem der Zustrombereiche 17, 18, 19, 20 angeschlossen: das zweite Ende der Überströmleitung 26 an dem Zustrombereich 17 angeschlossen, das zweite Ende der Überströmleitung 27 an dem Zustrombereich 18, das zweite Ende der Überströmleitung 28 an dem Zustrombereich 19 und das zweite Ende der Überströmleitung 29 ist an dem Zustrombereich 20 angeschlossen.

Weiter hat der Brenner 10 Mittel 30, 31, 32, 33 zum Zuführen von Brennstoff. Bei dem Ausführungsbeispiel sind die Mittel 30, 31, 32, 33 zum Zuführen von Brennstoff als Brennstoffleitungen 30, 31, 32, 33 ausgebildet. Bei dem Ausführungsbeispiel hat der Brenner vier Brennstoffleitungen 30, 31, 32, 33. Die Brennstoffleitung 30 ist als Brennstoff-Hauptleitung 30 ausgebildet. Ein erstes Ende der Brennstoff-Hauptleitung 30 ist einer in der Figur nicht dargestellten Brennstoffquelle zugeordnet und mit dieser verbunden, insbesondere fluidverbunden. Ein zweites Ende der Brennstoff-Hauptleitung 30 ist mit der Überströmleitung 26 verbunden, insbesondere fluidverbunden. Die Brennstoffleitungen 31, 32, 33 sind als Brennstoff-Nebenleitungen 31, 32, 33 ausgebildet. Ein erstes Ende der Brennstoff-Nebenleitungen 31, 32, 33 ist jeweils mit der Brennstoff-Hauptleitung 30 verbunden, insbesondere fluidverbunden. Ein zweites Ende der Brennstoff-Nebenleitungen 31, 32, 33 ist jeweils mit einer der Überströmleitungen 27, 28, 29 verbunden, insbesondere fluidverbunden: dabei ist das zweite Ende der Brennstoff-Nebenleitung 31 mit der Überströmleitung verbunden, das zweite Ende der Brennstoff-Nebenleitung 32 mit der Überströmleitung 28 und das zweite Ende der Brennstoff-Nebenleitung 33 mit der Überströmleitung 29. In einer anderen Ausführungsform ist denkbar, dass ein zweites Ende der Brennstoff-Hauptleitung sowie der Brennstoff-Nebenleitungen nicht mit einer Überströmleitung verbunden ist, sondern jeweils direkt an einem der Zustrombereiche angeschlossen, insbesondere mit diesem fluidverbunden ist.

Weiter hat der Brenner 10 Regelventile 34. Bei dem Ausführungsbeispiel hat der Brenner acht Regelventile 34. Die Regelventile 34 dienen zur Regelung und Kontrolle des Gasflusses in den Überströmleitungen 25, 26, 27, 28, 29 und den Brennstoffleitungen 30, 31, 32, 33. Jeweils ein Regelventil 34 ist jeweils einer der Überströmleitungen 26, 27, 28, 29 zugeordnet. Weiter ist jeweils ein Regelventil 34 jeweils einer der Brennstoffleitungen 30, 31, 32, 33 zugeordnet.

Die Funktionsweise des erfindungsgemäßen Brenners 10 wird im Folgenden anhand der Fig. 1 näher erläutert:
Bei dem in Fig. 1 gezeigten Brenner 10 wird die vom Verdichter bereitgestellte komprimierte Luft in das druckhaltende Gehäuse 12 geleitet und strömt dort entgegen der Strömung im Reaktionskörper 11, in der Figur von dem zweiten Ende 14 zu dem ersten Ende 13. Dabei wird Wärme vom Reaktionskörper 11 aufgenommen. Ein Teil der Luft wird als Primärluft über die Primärluft-Überströmleitung 25 mit Regelventil 34 zu der Wärmequelle 15 im Reaktionskörper 11 geleitet.

Die Primärluft wird von der Wärmequelle 15 auf eine Temperatur größer der Mindestreaktionstemperatur erwärmt und strömt mit niedriger Strömungsgeschwindigkeit in den ersten Zustrombereich 17. In dem ersten Zustrombereich 17 wird Sekundärluft aus der Überströmleitung 26, gemischt mit einem Brennstoff aus der Brennstoffleitung 30, der Primärluft zugeführt. Dabei wird soviel Sekundärluft und Brennstoff mittels der Regelventile 34 zu dosiert, dass ein leichter Sauerstoffüberschuss (λ ≥ 1) verbleibt und dass die Mindestreaktionstemperatur nicht unterschritten wird.

Das Gasgemisch strömt durch den ersten Mischbereich 65 in den ersten Reaktionsbereich 21. Der erste Reaktionsbereich 21 besteht aus einer mit feinen Kanälen durchzogenen Struktur. In dem Reaktionsbereich 21 wird das Gasgemisch aus Luft und Brennstoff durch Reaktion an Oberflächen, katalytische Wirkung und/oder heterogene Katalysatoren zur Reaktion gebracht und exotherm umgesetzt. Aus dem ersten Reaktionsbereich 21 strömt das heiße Reaktionsprodukt in den zweiten Zustrombereich 18. In dem zweiten Zustrombereich 18 wird auf ähnliche Weise ein Vorgemisch aus Sekundärluft und Brennstoff zugeführt, so dass die Mindestreaktionstemperatur des Gasgemisches nicht unterschritten wird. Das neue Gasgemisch strömt durch den zweiten Mischbereich 66 in den zweiten Reaktionsbereich 22. In dem zweiten Reaktionsbereich 22 setzt sich das Gasgemisch analog zum Vorgang in dem ersten Reaktionsbereich 21 in einer exothermen Reaktion um. Die zuvor beschriebenen Vorgänge wiederholen sich, bis das Gasgemisch in Masse und Temperatur den Eingangsbedingungen der Turbine entspricht.

## Patentansprüche

1. Vorrichtung, insbesondere Brenner, zur Umsetzung von förderfähigen Brennstoffen, mit einem druckhaltenden Reaktionskörper (11), der einen ersten Reaktionsbereich (21, 22, 23, 24), dem Brennstoff zugeführt und in dem der Brennstoff umgesetzt wird, und einen dem ersten Reaktionsbereich (21, 22, 23, 24) stromabwärts nachgeschalteten weiteren Reaktionsbereich (21, 22, 23, 24) hat, wobei dem weiteren Reaktionsbereich (21, 22, 23, 24) Brennstoff zugeführt und der Brennstoff in dem weiteren Reaktionsbereich (21, 22, 23, 24) umgesetzt wird, und wobei das Volumen des in Stromrichtung auf den ersten Reaktionsbereich (21, 22, 23, 24) folgenden weiteren Reaktionsbereichs (21, 22, 23, 24) gegenüber dem ersten Reaktionsbereich (21, 22, 23, 24) ansteigt, wobei dem Reaktionsbereich (21, 22, 23, 24) eine Wärmequelle (15) und mindestens ein Zuströmbereich (17,18,19,20) vorgeschaltet ist, und mit einem den Reaktionskörper (11) umgebenden druckhaltenden Gehäuse (12), und mit einer Überströmleitung (25, 26, 27, 28, 29), wobei eine Brennstoffleitung (30, 31, 32, 33) zur Bereitstellung eines Brennstoffes mit einem ersten Ende einer Brennstoffquelle zuordenbar ist und mit mindestens einem weiteren Ende mit der einem Zustrombereich (17, 18, 19, 20) zugeordneten Überströmleitung (26, 27, 28, 29) oder einem Zustrombereich (17, 18, 19, 20) fluidverbunden ist, **dadurch gekennzeichnet, dass** die Überströmleitung (25, 26, 27, 28, 29) mit einem ersten Ende mit dem druckhaltenden Gehäuse (12), und mit einem zweiten Ende mit dem Zustrombereich (17, 18, 19, 20) fluidverbunden ist, wobei der Überströmleitung (25, 26, 27, 28, 29) mindestens ein Regelventil (34) zum Regeln eines Gasflusses aus dem druckhaltenden Gehäuse (12) durch die Überströmleitung (25, 26, 27, 28, 29) in den Zustrombereich (17, 18, 19, 20) zugeordnet ist, und der Reaktionsbereich (21, 22, 23, 24) katalytische Eigenschaften hat und/oder ein Katalysatormaterial aufweist.

2. Vorrichtung nach Anspruch 1, **gekennzeichnet durch** mehrere weitere Reaktionsbereiche (21, 22, 23, 24), denen jeweils Brennstoff zugeführt und in denen jeweils der Brennstoff umgesetzt wird, die insbesondere kaskadenartig aufeinander folgend angeordnet sind, wobei vorzugsweise die Volumina in Stromrichtung aufeinander folgender Reaktionsbereiche (21, 22, 23, 24) ansteigen, wobei besonders bevorzugt die Volumina in Stromrichtung aufeinander folgender Zustrombereiche (17, 18, 19, 20) ansteigen, und/oder dass dem Reaktionsbereich (21, 22, 23, 24) mindestens ein Mischbereich (65,66,67,68) zugeordnet, insbesondere vorgeschaltet, vorzugsweise stromaufwärts vorgeschaltet ist und/oder dass dem Zustrombereich (17, 18, 19, 20) mindestens ein Mischbereich (65,66,67,68)) zugeordnet, insbesondere nachgeschaltet, vorzugsweise stromabwärts nachgeschaltet ist, wobei insbesondere der zugeordnete Mischbereich (65, 66, 67, 68) zwischen dem Reaktionsbereich (21, 22, 23, 24) und dem zugeordneten Zustrombereich (17, 18, 19, 20) angeordnet ist, und wobei vorzugsweise die Volumina in Stromrichtung aufeinander folgender Mischbereiche (65, 66, 67, 68) ansteigen.

3. Vorrichtung nach Anspruch 1 oder 2, **dadurch gekennzeichnet, dass** der Reaktionsbereich (21, 22, 23, 24) mindestens eine offen-zellige und/oder mit insbesondere feinen Kanälen durchzogene Struktur und/oder ein Gewebe aus einem keramischen oder metallischem Werkstoff hat.

4. Vorrichtung nach einem der vorhergehenden Ansprüche, **dadurch gekennzeichnet, dass** vorzugsweise dem Reaktionskörper (11) und/oder dem druckhaltenden Gehäuse (12) ein Verdichter, insbesondere zum Komprimieren von Luft, zuordenbar, insbesondere vorschaltbar ist, und/oder dass die Wärmequelle ein Gaserhitzer (15), ein Pilotbrenner oder ein Plasmabrenner ist.

5. Vorrichtung nach einem der vorhergehenden Ansprüche, **dadurch gekennzeichnet, dass** mindestens ein Regelventil (34) zum Regeln eines Gasflusses einer Brennstoffleitung (30, 31, 32, 33) zugeordnet ist.

6. Vorrichtung nach einem der vorhergehenden Ansprüche, **dadurch gekennzeichnet, dass** an ihrem stromabwärtigen Ende eine Turbine anordenbar ist, wobei vorzugsweise ein von dem ersten Ende (13) des Reaktionskörpers (11) abgewandtes zweites, insbesondere der Turbine zugeordnetes Ende (14) eine Ausströmöffnung (16) hat, die insbesondere als eine Zugangsöffnung zu der Turbine ausgebildet ist.

7. Verfahren zur zur Durchführung in einer Vorrichtung nach einem der vorhergehenden Ansprüche, zur Umsetzung von förderfähigen Brennstoffen, bei dem Brennstoff einem ersten Reaktionsbereich (21, 22, 23, 24) eines Reaktionskörpers (11) zugeführt und in diesem umgesetzt wird, und bei dem einem weiteren, dem ersten Reaktionsbereich (21, 22, 23, 24) stromabwärts nachgeschaltet angeordneten Reaktionsbereich (21, 22, 23, 24) Brennstoff zugeführt und in diesem umgesetzt wird, **dadurch gekennzeichnet, dass** von einem Verdichter komprimierte Luft als Luftmassenstrom in ein, den Reaktionskörper (11) umgebendes druckhaltendes Gehäuse (12) geleitet wird, wobei mittels einer Überströmleitung (25, 26, 27, 28, 29) ein Teil des Luftmassenstroms zu mindestens einem Zustrombereich (17, 18, 19, 20), insbesondere in dem Reaktionskörper (11) geleitet und der Gasfluss in der Überströmleitung (25, 26, 27, 28, 29) in mindestens einen Zustrombereich (17, 18, 19, 20) mittels mindestens eines Regelventils (34) gesteuert oder geregelt wird.

8. Verfahren nach Anspruch 7, **dadurch gekennzeichnet, dass** Brennstoff und/oder Luft in Stromrichtung durch die in einem Reaktionskörper (11) angeordneten Reaktionsbereiche (21, 22, 23, 24), vorzugsweise hin zu einer Ausströmöffnung (16), insbesondere durch die Ausströmöffnung (16) als Zugangsöffnung zu einer Turbine geleitet werden und/oder dass Brennstoff und/oder Luft in mindestens einen Zustrombereich (17, 18, 19, 20) in dem Reaktionskörper (11) eingeleitet werden, und/oder dass Brennstoff und/oder Luft in einem Mischbereich (65, 66, 67, 68) in dem Reaktionskörper (11) gemischt werden.

9. Verfahren Anspruch 7 oder 8, **dadurch gekennzeichnet, dass** hochkalorische und/oder niederkalorische Brenngase und/oder vergaste Flüssigbrennstoffe als Brennstoff umgesetzt werden und/oder dass die Umsetzung des Brennstoffs flammlos, insbesondere katalytisch erfolgt, wobei insbesondere Brennstoff und/oder Luft mittels einer als ein Gaserhitzer (15), ein Pilotbrenner oder ein Plasmabrenner ausgebebildeten Wärmequelle (15), insbesondere vor der Umsetzung, erhitzt werden, wobei vorzugsweise mittels der Wärmequelle (15) Brennstoff und/oder Luft auf eine Temperatur größer einer für die Umsetzung eines Gasgemisches aus Luft und dem Brennstoff notwendigen Mindestreaktionstemperatur erwärmt werden, vorzugsweise größer oder gleich 100° C, besonders bevorzugt größer oder gleich 500° C, insbesondere ist die Temperatur kleiner 650° C.

10. Verfahren nach Anspruch 8 oder 9, **dadurch gekennzeichnet, dass** Luft mittels eines, insbesondere dem Reaktionskörper (11) und/oder den Zustrombereichen vorgeschalteten Verdichters komprimiert wird, wobei vorzugsweise die vom Verdichter komprimierte Luft vorzugsweise entgegen der Stromrichtung in dem Reaktionskörper (11), insbesondere entlang dem Reaktionskörper (11) in dem druckhaltenden Gehäuse (12) geleitet wird, wobei besonders bevorzugt mittels einer Überströmleitung (25, 26, 27, 28, 29) ein Teil des Luftmassenstroms als Primärluft zu der, insbesondere an einem ersten Ende (13) des Reaktionskörpers (11) angeordneten, Wärmequelle (15) und/oder ein Teil des Luftmassenstroms als Sekundärluft zu mindestens einem Zustrombereich (17, 18, 19, 20), insbesondere in dem Reaktionskörper (11) und/oder ein Gasgemisch aus einem Teil des Luftmassenstroms und Brennstoff zu mindestens einem Zustrombereich (17, 18, 19, 20), insbesondere in dem Reaktionskörper (11), geleitet wird.

11. Verfahren nach einem der Ansprüche 7 bis 10, **dadurch gekennzeichnet, dass** Brennstoff mittels einer Brennstoffleitung (30, 31, 32, 33) in mindestens einen Zustrombereich (17, 18, 19, 20), insbesondere in dem Reaktionskörper (11), und/oder zu einer Wärmequelle (15) geleitet wird.

12. Verfahren nach Anspruch 10 oder 11, **dadurch gekennzeichnet, dass** ein Gasgemisch aus Brennstoff und Luft in dem Zustrombereich (17, 18, 19, 20) erzeugt wird, wobei Brennstoff und Luft dem Zustrombereich mittels der Überströmleitung (26, 27, 28, 29) und/oder der Brennstoffleitung (30, 31, 32, 33) zugeführt werden, bis insbesondere die Temperatur des Gasgemisches in dem Reaktionskörper (11) der Mindestreaktionstemperatur des Gasgemisches entspricht oder größer ist, vorzugsweise größer oder gleich 100° C, besonders bevorzugt größer oder gleich 500° C, insbesondere ist die Temperatur kleiner 650° C oder dass mittels mindestens eines Regelventils (34) der Gasfluss des Brennstoffs und/oder der Luft in einer Überströmleitung (25, 26, 27, 28, 29) und/oder einer Brennstoffleitung (30, 31, 32, 33) zu einer Wärmequelle (15) und/oder in mindestens einen Zustrombereich (17, 18, 19, 20) gesteuert oder geregelt wird.

13. Verfahren nach einem der Ansprüche 7 bis 12, **dadurch gekennzeichnet, dass** das Gasgemisch aus Brennstoff und Luft in dem Reaktionsbereich (21, 22, 23, 24) durch eine Reaktion an Oberflächen und/oder eine katalytische Wirkung und/oder heterogene Katalysatoren umgesetzt wird und/oder dass der Anteil an Sauerstoff in dem Gasgemisch aus Luft und Brennstoff in dem Reaktionsbereich (21, 22, 23, 24) in einem Bereich von acht Volumenprozent bis zwanzig Volumenprozent liegt, vorzugsweise in einem Bereich von zehn Volumenprozent bis zwanzig Volumenprozent, besonders bevorzugt bei fünfzehn Volumenprozent und/oder dass das Gasgemisch aus einer Ausströmöffnung (16) in dem Reaktionskörper (11) heraus, insbesondere zu einer Turbine hin geleitet wird, wobei die Austrittstemperatur des Gasgemisches aus der Ausströmöffnung (16) insbesondere in einem Bereich von 1000° C bis 1100° C liegt.

14. Verfahren nach einem der Ansprüche 7 bis 13, **dadurch gekennzeichnet, dass** mindestens zwei, insbesondere als Brenner ausgebildete Vorrichtungen nach einem der Ansprüche 1 bis 6 zur Umsetzung von Brennstoffen parallel geschaltet werden.

15. System zur Umsetzung von Brennstoffen aus mindestens zwei Vorrichtungen nach einem der Ansprüche 1 bis 6, wobei die Vorrichtungen parallel geschaltet sind.

16. Verwendung einer Vorrichtung nach einem der Ansprüche 1 bis 6 und/oder eines Verfahrens nach einem der Ansprüche 7 bis 14 und/oder eines Systems nach Anspruch 15, zur flammlosen Umsetzung von insbesondere niederkalorischen Brennstoffen, insbesondere in Kombination mit einer Gasturbine.

## Claims

1. Device, in particular a burner, for reacting conveyable fuels, with a pressurized reaction body (11) which has a first reaction area (21, 22, 23, 24) to which fuel is supplied and in which the fuel is reacted, and a further reaction area (21, 22, 23, 24) connected downstream of the first reaction area (21, 22, 23, 24), wherein fuel is supplied to the further reaction area (21, 22, 23, 24) and the fuel is reacted in the further reaction area (21, 22, 23, 24), and wherein the volume of the further reaction area (21, 22, 23, 24) following the first reaction area (21, 22, 23, 24) in the flow direction increases relative to the first reaction area (21, 22, 23, 24, wherein a heat source (15) and at least one inflow area (17, 18, 19, 20) are connected upstream of the reaction area (21, 22, 23, 24), and with a pressurized housing (12) surrounding the reaction body (11), and with an overflow line (25, 26, 27, 28, 29), wherein a fuel line (30, 31, 32, 33) for supplying fuel can be assigned with a first end of a fuel source and with at least one further end with an overflow line (26, 27, 28, 29) assigned to an inflow area (17, 18, 19, 20) or an inflow area (17, 18, 19, 20), **characterized in that** the overflow line (25, 26, 27, 28, 29) is fluidly connected at a first end to the pressurized housing (12) and at a second end to the inflow area (17, 18, 19, 20), wherein the overflow line (25, 26, 27, 28, 29) is assigned at least one control valve (34) for controlling a gas flow from the pressurized housing (12) through the overflow line (25, 26, 27, 28, 29) into the inflow area (17, 18, 19, 20), and the reaction area (21, 22, 23, 24) has catalytic properties and/or comprises a catalyst material.

2. Device according to claim 1, **characterized by** a plurality of further reaction areas (21, 22, 23, 24), each of which is supplied fuel and in each of which the fuel is reacted, which are arranged in particular in a cascade-like manner following one another, wherein preferably the volumes of the reaction areas (21, 22, 23, 24) following one another in the flow direction increase, wherein particularly preferably the volumes of the inflow areas (17, 18, 19, 20) following one another in the flow direction increase, and/or that at least one mixing area (65, 66, 67, 68) is assigned to the reaction area (21, 22, 23, 24), in particular upstream, preferably upstream, and/or that at least one mixing area (65, 66, 67, 68) is assigned to the inflow area (17, 18, 19, 20), in particular downstream, preferably downstream, wherein in particular the assigned mixing area (65, 66, 67, 68) is arranged between the reaction area (21, 22, 23, 24) and the associated inflow area (17, 18, 19, 20), and wherein the volumes of successive mixing areas (65, 66, 67, 68) preferably increase in the flow direction.

3. Device according to claim 1 or 2, **characterized in that** the reaction area (21, 22, 23, 24) has at least one open-cell structure and/or a structure with particularly fine channels and/or a fabric made of a ceramic or metallic material.

4. Device according to one of the preceding claims, **characterized in that** a compressor, in particular for compressing air, can preferably be assigned to the reaction body (11) and/or the pressurized housing (12), in particular can be connected upstream, and/or that the heat source is a gas heater (15), a pilot burner, or a plasma burner.

5. Device according to one of the preceding claims, **characterized in that** at least one control valve (34) is assigned to a fuel line (30, 31, 32, 33) for controlling a gas flow.

6. Device according to one of the preceding claims, **characterized in that** a turbine can be arranged at its downstream end, wherein preferably a second end (14) facing away from the first end (13) of the reaction body (11), in particular associated with the turbine, has an outlet opening (16) which is designed in particular as an access opening to the turbine.

7. Method for implementation in a device according to one of the preceding claims, for reacting conveyable fuels, in which fuel is fed to a first reaction area (21, 22, 23, 24) of a reaction body (11) and reacted therein, and in which a further reaction area (21, 22, 23, 24) is arranged downstream of the first reaction area (21, 22, 23, 24) and is reacted therein, **characterized in that** air compressed by a compressor is fed as an air mass flow into a pressurized housing (12) surrounding the reaction body (11), wherein a portion of the air mass flow is fed by means of an overflow line (25, 26, 27, 28, 29) to at least one inflow area (17, 18, 27, 28, 29), in particular in the reaction body (11), and the gas flow in the overflow line (25, 26, 27, 28, 29) is controlled or regulated in at least one inflow area (17, 18, 19, 20) by means of at least one control valve (34).

8. Method according to claim 7, **characterized in that** fuel and/or air are directed in the flow direction through the reaction areas (21, 22, 23, 24) arranged in a reaction body (11), preferably towards an outflow opening (16), in particular through the outflow opening (16) as an access opening to a turbine, and/or that fuel and/or air is introduced into at least one inflow area (17, 18, 19, 20) in the reaction body (11), and/or that fuel and/or air are mixed in a mixing area (65, 66, 67, 68) in the reaction body (11).

9. Method according to claim 7 or 8, **characterized in that** high-calorific and/or low-calorific fuel gases and/or gasified liquid fuels are reacted as fuel and/or that the reaction of the fuel takes place without flame, in particular catalytically, wherein in particular fuel and/or air are heated by means of a heat source (15) in the form of a gas heater (15), a pilot burner or a plasma burner, in particular before the reaction, wherein fuel and/or air are preferably heated by means of the heat source (15) to a temperature greater than a minimum reaction temperature necessary for the reaction of a gas mixture of air and the fuel, preferably greater than or equal to 100°C, particularly preferably greater than or equal to 500°C, in particular the temperature is less than 650°C.

10. Method according to claim 8 or 9, **characterized in that** air is compressed by means of a compressor, in particular upstream of the reaction body (11) and/or the inflow areas, wherein the air compressed by the compressor is preferably guided in the reaction body (11) against the direction of flow, in particular along the reaction body (11) in the pressurized housing (12), wherein particularly preferably by means of an overflow line (25, 26, 27, 28, 29) a part of the air mass flow is directed as primary air to the heat source (15), arranged in particular at a first end (13) of the reaction body (11) and/or a portion of the air mass flow is directed as secondary air to at least one inflow area (17, 18, 19, 20), in particular in the reaction body (11), and/or a gas mixture consisting of a portion of the air mass flow and fuel is fed to at least one inflow area (17, 18, 19, 20), in particular in the reaction body (11).

11. Method according to one of claims 7 to 10, **characterized in that** fuel is fed by means of a fuel line (30, 31, 32, 33) to at least one inflow area (17, 18, 19, 20), in particular in the reaction body (11), and/or to a heat source (15).

12. Method according to claim 10 or 11, **characterized in that** a gas mixture of fuel and air is generated in the inflow area (17, 18, 19, 20), wherein fuel and air are supplied to the inflow area by means of the overflow line (26, 27, 28, 29) and/or the fuel line (30, 31, 32, 33) until, in particular, the temperature of the gas mixture in the reaction body (11) corresponds to or is greater than the minimum reaction temperature of the gas mixture, preferably greater than or equal to 100°C, particularly preferably greater than or equal to 500°C, in particular the temperature is less than 650°C, or that by means of at least one control valve (34) the gas flow of the fuel and/or the air in an overflow line (25, 26, 27, 28, 29) and/or a fuel line (30, 31, 32, 33) to a heat source (15) and/or into at least one inflow area (17, 18, 19, 20) is controlled or regulated.

13. Method according to one of claims 7 to 12, **characterized in that** the gas mixture of fuel and air in the reaction area (21, 22, 23, 24) is reacted by a reaction on surfaces and/or a catalytic effect and/or heterogeneous catalysts, and/or that the proportion of oxygen in the gas mixture of air and fuel in the reaction area (21, 22, 23, 24) is in a range of eight percent by volume to twenty percent by volume, preferably in a range of ten percent by volume to twenty percent by volume, particularly preferably at fifteen percent by volume, and/or that the gas mixture is conducted out of an outlet opening (16) in the reaction body (11), in particular to a turbine, the outlet temperature of the gas mixture from the outlet opening (16) being in particular in a range of 1000°C to 1100°C.

14. Method according to one of claims 7 to 13, **characterized in that** at least two devices, in particular devices designed as burners according to one of claims 1 to 6, are connected in parallel for the reaction of fuels.

15. System for reacting fuels from at least two devices according to one of claims 1 to 6, wherein the devices are connected in parallel.

16. Use of a device according to one of claims 1 to 6 and/or a method according to one of claims 7 to 14 and/or a system according to claim 15 for the flameless reaction of, in particular, low-calorific fuels, in particular in combination with a gas turbine.

## Revendications

1. Dispositif, en particulier brûleur, permettant de convertir des combustibles transportables, comprenant un corps de réaction (11) retenant la pression et qui présente une première région de réaction (21, 22, 23, 24), jusqu'à laquelle est acheminé du combustible et dans laquelle le combustible est converti, et une autre région de réaction (21, 22, 23, 24) connectée en aval, par rapport à la circulation, de la première région de réaction (21, 22, 23, 24), dans lequel du combustible est acheminé jusqu'à l'autre région de réaction (21, 22, 23, 24) et le combustible est converti dans l'autre région de réaction (21, 22, 23, 24), et dans lequel le volume de l'autre région de réaction (21, 22, 23, 24) succédant à la première région de réaction (21, 22, 23, 24) dans la direction de circulation augmente par rapport à la première région de réaction (21, 22, 23, 24), dans lequel une source de chaleur (15) et au moins une région d'alimentation (17, 18, 19, 20) sont connectées en amont de la région de réaction (21, 22, 23, 24), et comprenant une enveloppe résistante à la pression (12) entourant le corps de réaction (11), et comprenant une conduite de trop-plein (25, 26, 27, 28, 29), dans lequel une conduite de combustible (30, 31, 32, 33) permettant de fournir un combustible peut être associée à une première extrémité d'une source de combustible et est reliée de manière fluidique, par au moins une autre extrémité, à une région d'alimentation (17, 18, 19, 20) ou à la conduite de trop-plein (26, 27, 28, 29) associée à une région d'alimentation (17, 18, 19, 20), **caractérisé en ce que** la conduite de trop-plein (25, 26, 27, 28, 29) est reliée de manière fluidique, par une première extrémité, à l'enveloppe résistante à la pression (12) et, par une deuxième extrémité, à la région d'alimentation (17, 18, 19, 20), dans lequel la conduite de trop-plein (25, 26, 27, 28, 29) est associée à au moins une soupape de régulation (34) permettant de réguler un flux de gaz partant de l'enveloppe résistante à la pression (12) pour aboutir dans la région d'alimentation (17, 18, 19, 20) en passant par la conduite de trop-plein (25, 26, 27, 28, 29), et la région de réaction (21, 22, 23, 24) présente des propriétés catalytiques et/ou présente un matériau catalytique.

2. Dispositif selon la revendication 1, **caractérisé par** plusieurs autres régions de réaction (21, 22, 23, 24) vers lesquelles du combustible est respectivement acheminé et dans lesquelles le combustible est respectivement converti et qui sont en particulier agencées en cascade les unes après les autres, dans lequel les volumes augmentent de manière préférée dans la direction de circulation de régions de réaction (21, 22, 23, 24) successives, dans lequel les volumes augmentent de manière particulièrement préférée dans la direction de circulation de régions d'alimentation (17, 18, 19, 20) successives, et/ou en ce qu'au moins une région de mélange (65, 66, 67, 68) est associée à la région de réaction (21, 22, 23, 24), en particulier est connectée en amont de celle-ci, de manière préférée est connectée en amont de celle-ci par rapport à la circulation et/ou en ce qu'au moins une région de mélange (65, 66, 67, 68) est associée à la région d'alimentation (17, 18, 19, 20), en particulier est connectée en aval de celle-ci, de manière préférée est connectée en aval de celle-ci par rapport à la circulation, dans lequel la région de mélange (65, 66, 67, 68) associée est agencée entre la région de réaction (21, 22, 23, 24) et la région d'alimentation (17, 18, 19, 20) associée, et en ce que le volume augmente de manière préférée dans la direction de circulation de régions de mélange (65, 66, 67, 68) successives.

3. Dispositif selon la revendication 1 ou 2, **caractérisé en ce que** la région de réaction (21, 22, 23, 24) présente au moins une structure à cellules ouvertes et/ou traversée de canaux particulièrement fins et/ou un tissu constitué d'un matériau céramique ou métallique.

4. Dispositif selon l'une quelconque des revendications précédentes, **caractérisé en ce qu'**un compresseur, en particulier permettant de comprimer de l'air, peut de manière préférée être associé au corps de réaction (11) et/ou à l'enveloppe résistante à la pression (12), en particulier être connecté en amont de celui-ci ou de celle-ci, et/ou **en ce que** la source de chaleur est un réchauffeur de gaz (15), un brûleur pilote ou une torche à plasma.

5. Dispositif selon l'une quelconque des revendications précédentes, **caractérisé en ce qu'**au moins une soupape de régulation (34) permettant de réguler un flux de gaz est associée à une conduite de combustible (30, 31, 32, 33).

6. Dispositif selon l'une quelconque des revendications précédentes, **caractérisé en ce qu'**une turbine peut être agencée à son extrémité située en aval par rapport à la circulation, dans lequel une deuxième extrémité (14) en particulier associée à la turbine et opposée à la première extrémité (13) du corps de réaction (11) présente un orifice de sortie (16), qui est réalisé en particulier sous la forme d'un orifice d'accès à la turbine.

7. Procédé de conversion dans un dispositif selon l'une quelconque des revendications précédentes, permettant de convertir des combustibles transportables, au cours duquel du combustible est acheminé jusqu'à une première région de réaction (21, 22, 23, 24) d'un corps de réaction (11) et y est converti, et au cours duquel du combustible est acheminé jusqu'à une autre région de réaction (21, 22, 23, 24) agencée en aval, par rapport à la circulation, de la première région de réaction (21, 22, 23, 24) et y est converti, **caractérisé en ce que** de l'air comprimé par un compresseur est dirigé sous forme de flux massique d'air dans une enveloppe résistante à la pression (12) entourant le corps de réaction (11), dans lequel une partie du flux massique d'air est dirigée au moyen d'une conduite de trop-plein (25, 26, 27, 28, 29) vers au moins une région d'alimentation (17, 18, 19, 20), en particulier dans le corps de réaction (11), et le flux de gaz au sein de la conduite de trop-plein (25, 26, 27, 28, 29) est commandé ou régulé dans au moins une région d'alimentation (17, 18, 19, 20) au moyen d'au moins une soupape de régulation (34).

8. Procédé selon la revendication 7, **caractérisé en ce que** du combustible et/ou de l'air est/sont dirigé(s) vers une turbine dans la direction de circulation à travers les régions de réaction (21, 22, 23, 24) agencées dans un corps de réaction (11), de manière préférée vers un orifice de sortie (16), en particulier à travers l'orifice de sortie (16) faisant office d'orifice d'accès et/ou **en ce que** du combustible et/ou de l'air est/sont introduit(s) dans le corps de réaction (11) dans au moins une région d'alimentation (17, 18, 19, 20), et/ou **en ce que** du combustible et/ou de l'air est/sont mélangé(s) dans le corps de réaction (11) dans une région de mélange (65, 66, 67, 68).

9. Procédé selon la revendication 7 ou 8, **caractérisé en ce que** des gaz combustibles à haut pouvoir calorifique et/ou à bas pouvoir calorifique et/ou des combustibles liquides gazéifiés, faisant office de combustible, sont convertis et/ou **en ce que** la conversion du combustible a lieu sans flamme, en particulier de manière catalytique, dans lequel du combustible et/ou de l'air sont en particulier chauffés, en particulier avant la conversion, au moyen d'une source de chaleur (15) réalisée sous la forme d'un réchauffeur de gaz, d'un brûleur pilote ou d'une torche à plasma, dans lequel du combustible et/ou de l'air sont chauffés de manière préférée au moyen de la source de chaleur (15) à une température supérieure à une température de réaction minimale nécessaire à la conversion d'un mélange gazeux d'air et de combustible, de manière préférée supérieure ou égale à 100°C, de manière particulièrement préférée supérieure ou égale à 500°C, la température étant en particulier inférieure à 650°C.

10. Procédé selon la revendication 8 ou 9, **caractérisé en ce que** l'air est comprimé au moyen d'un compresseur, en particulier connecté en amont du corps de réaction (11) et/ou des régions d'alimentation, dans lequel l'air comprimé par le compresseur est de manière préférée dirigé dans le corps de réaction (11) à l'encontre de la direction de circulation, en particulier dans l'enveloppe résistante à la pression (12) le long du corps de réaction (11), dans lequel une partie du flux massique d'air est dirigée en tant qu'air primaire, de manière particulièrement préférée au moyen d'une conduite de trop-plein (25, 26, 27, 28, 29), vers la source de chaleur (15) agencée en particulier à une première extrémité (13) du corps de réaction (11) et/ou une partie du flux massique d'air est dirigée en tant qu'air secondaire vers au moins une région d'alimentation (17, 18, 19, 20), en particulier dans le corps de réaction (11), et/ou un mélange gazeux constitué d'une partie du flux massique d'air et de combustible est dirigé vers au moins une région d'alimentation (17, 18, 19, 20), en particulier dans le corps de réaction (11).

11. Procédé selon l'une quelconque des revendications 7 à 10, **caractérisé en ce que** du combustible est acheminé au moyen d'une conduite de combustible (30, 31, 32, 33) dans au moins une région d'alimentation (17, 18, 19, 20), en particulier dans le corps de réaction (11), et/ou vers une source de chaleur (15).

12. Procédé selon la revendication 10 ou 11, **caractérisé en ce qu'**un mélange gazeux constitué de combustible et d'air est produit dans la région d'alimentation (17, 18, 19, 20), dans lequel du combustible et de l'air sont acheminés jusqu'à la région d'alimentation au moyen de la conduite de trop-plein (26, 27, 28, 29) et/ou de la conduite de combustible (30, 31, 32, 33), en particulier jusqu'à ce que la température du mélange gazeux dans le corps de réaction (11) corresponde ou soit supérieure à la température de réaction minimale du mélange gazeux, de manière préférée soit supérieure ou égale à 100°C, de manière particulièrement préférée soit supérieure ou égale à 500°C, la température étant en particulier inférieure à 650°C ou **en ce que** le flux de gaz du combustible et/ou de l'air dans une conduite de trop-plein (25, 26, 27, 28, 29) et/ou dans une conduite de combustible (30, 31, 32, 33) menant à une source de chaleur (15) et/ou dans au moins une région d'alimentation (17, 18, 19, 20) est commandé ou régulé au moyen d'au moins une soupape de régulation (34).

13. Procédé selon l'une quelconque des revendications 7 à 12, **caractérisé en ce que** le mélange gazeux constitué de combustible et d'air est converti dans la région de réaction (21, 22, 23, 24) grâce à une réaction sur des surfaces et/ou à un effet catalytique et/ou à des catalyseurs hétérogènes et/ou **en ce que** la proportion d'oxygène dans le mélange gazeux d'air et de combustible dans la région de réaction (21, 22, 23, 24) se situe dans une plage comprise entre huit pour cent en volume et vingt pour cent en volume, de manière préférée dans une plage comprise entre dix pour cent en volume et vingt pour cent en volume, de manière particulièrement préférée est de quinze pour cent en volume et/ou **en ce que** le mélange gazeux est dirigé dans le corps de réaction (11) à partir d'un orifice de sortie (16), en particulier vers une turbine, dans lequel la température de sortie du mélange gazeux hors de l'orifice de sortie (16) se situe en particulier dans une plage comprise entre 1000°C et 1100°C.

14. Procédé selon l'une quelconque des revendications 7 à 13, **caractérisé en ce qu'**au moins deux dispositifs selon l'une quelconque des revendications 1 à 6, en particulier réalisés sous la forme de brûleurs, sont connectés en parallèle en vue de la conversion de combustibles.

15. Système de conversion de combustibles constitué d'au moins deux dispositifs selon l'une quelconque des revendications 1 à 6, dans lequel les dispositifs sont connectés en parallèle.

16. Utilisation d'un dispositif selon l'une quelconque des revendications 1 à 6 et/ou d'un procédé selon l'une quelconque des revendications 7 à 14 et/ou d'un système selon la revendication 15 en vue de la conversion sans flamme de combustibles, en particulier à bas pouvoir calorifique, en particulier en combinaison avec une turbine à gaz.
